# EUROPEAN PATENT SPECIFICATION

(11) **EP 3 254 910 B1**
(45) Date of publication and mention of the grant of the patent: **11.12.2019**
(21) Application number: 16173052.8
(22) Date of filing: 06.06.2016
(51) Int. Cl.: B60R 22/46

(54) **A BELT RETRACTOR FOR A VEHICLE SAFETY BELT SYSTEM**
GURTAUFROLLER FÜR EIN FAHRZEUGSICHERHEITSGURTSYSTEM
ENROULEUR DE CEINTURE POUR UN SYSTÈME DE CEINTURE DE SÉCURITÉ DE VÉHICULE

(43) Date of publication of application: 13.12.2017
(73) Proprietor: TRW Automotive GmbH, 73553 Alfdorf (DE); TRW Polska Sp.z.o.o., 42-200 Czestochowa (PL)
(72) Inventor: Krukowski, Krzysztof, 42-200 Czestochowa (PL); Kotas, Blazej, 42-270 Witkowice (PL); Bryla, Tomasz, 42-200 Czestochowa (PL); Gajewski, Lukasz, 42-271 Czestochowa (PL)
(74) Representative: ZF TRW Patentabteilung

(56) References cited:
- WO-A1-2015/037485
- DE-A1-102006 021 381
- DE-A1-102007 008 495
- DE-A1-102014 006 499
- US-A1- 2015 336 539

## Description

The invention relates to a belt retractor for a vehicle safety belt system. In particular, the invention relates to a belt retractor comprising a belt tensioner for tensioning a safety belt during a belt tensioning phase, and a load limiter for limiting the load applied by the safety belt on a vehicle occupant after the belt tensioning phase during a load limiting phase.

A belt tensioner is intended to tension the safety belt in case of a crash so that the vehicle occupant takes part as quickly as possible in the overall deceleration of the vehicle. By tensioning the safety belt especially the negative effects of the so-called film spool effect (belt webbing loosely rolled on the belt reel) and belt slack (belt webbing that is not in close contact with the vehicle occupant), which impede the restraint of the vehicle occupant, are reduced.

A load limiter provides that the load of the safety belt acting on the vehicle occupant after tensioning of the safety belt does not excessively increase. In order to relieve the vehicle occupant, after locking the belt reel the belt reel is nevertheless allowed to rotate in the unwinding direction (opposite to the winding direction), the rotation being decelerated, however, by energy conversion, i.e. by performing work (e.g. twisting a torsion rod).

A particular type of a belt retractor, which became known from published German patent application DE 10 2006 031 359 A1, uses a deformable load transmission element instead of a linearly moving toothed rack for tensioning the safety belt. The deformable load transmission element is accommodated in a space-saving curved tube and can be moved by activation of a drive unit towards a toothed pinion coupled to the belt reel. The deformable load transmission element rotates the pinion so that the belt reel is rotated in a winding direction. The deformable load transmission element engages the teeth of the pinion relatively softly and smoothly, thus avoiding the rough tooth on tooth contact of common rack-and-pinion tensioners. Variants of this type of belt retractor are shown, inter alia, in DE 10 2010 051 418 A1, DE 10 2010 051 419 A1, DE 10 2010 051 420 A1, DE 10 2010 051 422 A1 and DE 10 2010 051 463 A1. A belt retractor according to the preamble of claim 1 is disclosed in DE 10 2007 008495 A1.

It is an object of the invention to provide a belt retractor that is capable of tensioning a safety belt to a certain amount and of allowing an unimpeded force-limiting operation immediately after the belt tensioning.

This problem is solved by a belt retractor according to claim 1. Advantageous and expedient embodiments of the belt retractor according to the invention are recited in the dependent claims.

The invention provides a belt retractor for a vehicle safety belt system comprising a belt tensioner for tensioning a safety belt during a tensioning phase, and a load limiter for limiting the load applied by the belt on a vehicle occupant during a load limiting phase after the tensioning phase. The belt tensioner includes a frame, a belt reel, a toothed pinion, a drive unit and an elongated load transmission element. The belt reel is rotatably supported in the frame, and the pinion is coupled to the belt reel. The load transmission element engages the teeth of the pinion during the belt tensioning phase. The belt tensioner further includes a disengagement mechanism for disengaging the load transmission element from the pinion at the end of the belt tensioning phase.

The invention makes use of the finding that the load transmission element forces the pinion - and the belt reel coupled thereto - to rotate only as long as the teeth of the pinion engage the load transmission element in a force transmitting manner. This is the case when the pinion teeth cut into the moving load transmission element. Insofar the belt tensioning phase is similar to known techniques.

However, in the load limiting phase, which follows after the belt tensioning phase, the belt reel needs to be turned in the opposite direction (unwinding direction) in a controlled manner. Therefore any excess movement of the load transmission element must not be transferred via the pinion to the belt reel. Moreover, as long as the teeth of the pinion are still stuck in the load transmission element, the desired rotation of the belt reel in the unwinding direction may be impeded or even blocked when the pinion is coupled to the belt reel. Therefore, the disengagement mechanism of the belt retractor according to the invention ensures that at the end of the belt tensioning phase the load transmission element is no longer in engagement with the pinion. As a result, rotation of the belt reel in the unwinding direction is neither affected by the load transmission element nor by the pinion in the further process of the load limiting phase. Due to the guaranteed and defined disengagement of the load transmission element there is no need to strictly limit the maximum length of the load transmission element, which would otherwise be necessary in order to avoid any exceeding of the belt tensioning.

The disengagement mechanism is realized with a support element that is transferable from an initial first state, in which the support element keeps the load transmission element in engagement with the pinion, into a second state, in which the support element no longer keeps the load transmission element in engagement with the pinion. Transferring the support element from the first state into the second state can thus be described as switching off the belt tensioning and allowing a force-limiting operation while the load transmission element may still be moving.

Transferring the load transmission element into the second state may be performed as changing the position of the load transmission element. This means the load transmission element is moved from a first position to a second position where it does not urge the load transmission element into engagement with the pinion anymore. It is also possible to bend or break the load transmission element to the same effect. All of these measures may also be combined in any suitable manner.

After the transfer of the support element into the second state the support element should provide room for the load transmission element to pass by the pinion. It is actually not necessary to actively disengage the load transmission element from the pinion since it takes a significant effort to cut the teeth of the pinion into the load transmission element. Once there is no counterforce provided by the support element anymore, the load transmission element will immediately and automatically take the easier path past the pinion.

Activation of the disengagement mechanism is preferably triggered by the moving load transmission element itself. Since the load transmission element is moving anyway during the belt tensioning phase, no additional source of energy is necessary to start the disengagement process. Moreover, since the overall angle of rotation of the belt reel depends on the travel distance of the load transmission element, it is possible to provide a "switch" at a defined location in the pathway of the load transmission element which corresponds to a desired maximum angle of rotation of the belt reel with respect to the belt tensioning.

More preferably, the support element is configured to be transferred from the first state into the second state by a force exerted by the moving load transmission element. According to this aspect of the invention, the moving load transmission element not only triggers the disengagement but also provides the required force that is necessary to move, bend and/or break the support element. Thus, the kinetic energy of the load transmission element is efficiently used for disengaging the load transmission element from the pinion at the end of the belt tensioning phase.

In the invention the disengagement mechanism includes a lever construction directly or indirectly acting on the support element. The term "lever construction" is to be understood in a broad sense and is not limited to a beam or rod construction. With a lever construction the movement of or the force exerted by the load transmission element can be easily transferred to another place, namely to the support element where it is needed to transfer the support element from the first state to the second state. By the design of the lever construction the movement, force or torque transferred to the support element can be adapted as required.

As already mentioned it is a preferred option to activate the disengagement mechanism by the moving load transmission element. According to the invention a lever construction is used, the most efficient way of activating the disengagement mechanism is to arrange a first lever portion in a pathway of the load transmission element. The pathway of the load transmission element is the defined course along which the load transmission element travels in the belt retractor during the belt tensioning phase. The first lever portion will thus be hit by the load transmission element after a defined travel distance. This will cause the lever to swivel and thereby initiate the disengagement process.

To facilitate the disengagement, the lever construction preferably includes a second portion which, upon swiveling of the lever construction, transfers the support element into the second state. Accordingly, no further mechanism is required for the disengagement as the lever construction itself, in particular the swivel movement of the second portion, is directly used to transfer the support element into the second state.

In some of the preferred embodiments the lever construction swivels about an axis that is identical to a rotation axis of the pinion and the belt reel. Since the belt reel and/or the pinion have a rotating shaft anyway, the shaft can be used as one part of a pivot mounting.

In a particular embodiment of the lever construction the second portion is arranged so as to rotate eccentrically with respect to the rotation axis of the pinion and the belt reel. This specific construction allows conversion of the rotary motion of the first lever portion into a linear motion that can be directed directly towards the support element. Due to the eccentric rotation no separate pivot axis is required for the lever construction.

In another preferred embodiment of the invention the lever construction includes a (separate) lever having a first leg arranged in a pathway of the load transmission element and a second leg indirectly acting on the support element by pressing on the load transmission element when the lever is swiveled. This embodiment allows a very compact design since it is not necessary for the lever to directly act on the support element which may require a bypass around the moving load transmission element. It was found that it is possible to transfer the support element into the second state with the second leg of the lever pushing the load transmission element in the direction of the support element.

For a defined transfer of the support element from the first state into the second state, in particular for a predetermined guided movement of the support element, it is expedient to have at least one slot, which may be formed in the frame of the belt retractor. The at least one slot is engaged by the support element for guiding the support element as desired.

Further features and advantages of the invention will become apparent from the following description and from the accompanying drawings to which reference is made. In the schematic drawings:
- Figure 1 shows an exploded view of a belt retractor;
- Figure 2 shows a sectional view of the assembled belt retractor;
- Figures 3a-3d show sectional views of a belt retractor concept according to the invention during various stages of a belt tensioning phase and a subsequent load limiting phase;
- Figure 4 shows a perspective view of a belt retractor according to a first embodiment of the invention;
- Figure 5a shows a side view of a portion of the belt retractor of Figure 4 before a belt tensioning phase;
- Figure 5b shows a side view of a portion of the belt retractor of Figure 4 during the belt tensioning phase;
- Figure 5c shows a side view of a portion of the belt retractor of Figure 4 during a load limiting phase after the belt tensioning phase;
- Figure 6 shows a perspective and partly transparent view of a belt retractor according to a second embodiment of the invention;
- Figure 7a shows a side view of a portion of the belt retractor of Figure 6 before a belt tensioning phase;
- Figure 7b shows a side view of a portion of the belt retractor of Figure 6 during the belt tensioning phase;
- Figure 7c shows a side view of a portion of the belt retractor of Figure 6 during a load limiting phase after the belt tensioning phase;
- Figure 8 shows a perspective and partly transparent view of a belt retractor according to a third embodiment of the invention;
- Figure 9a shows a side view of a portion of the belt retractor of Figure 8 at the beginning of a belt tensioning phase;
- Figure 9b shows a side view of a portion of the belt retractor of Figure 8 during the belt tensioning phase;
- Figure 9c shows a side view of a portion of the belt retractor of Figure 8 during a load limiting phase after the belt tensioning phase.

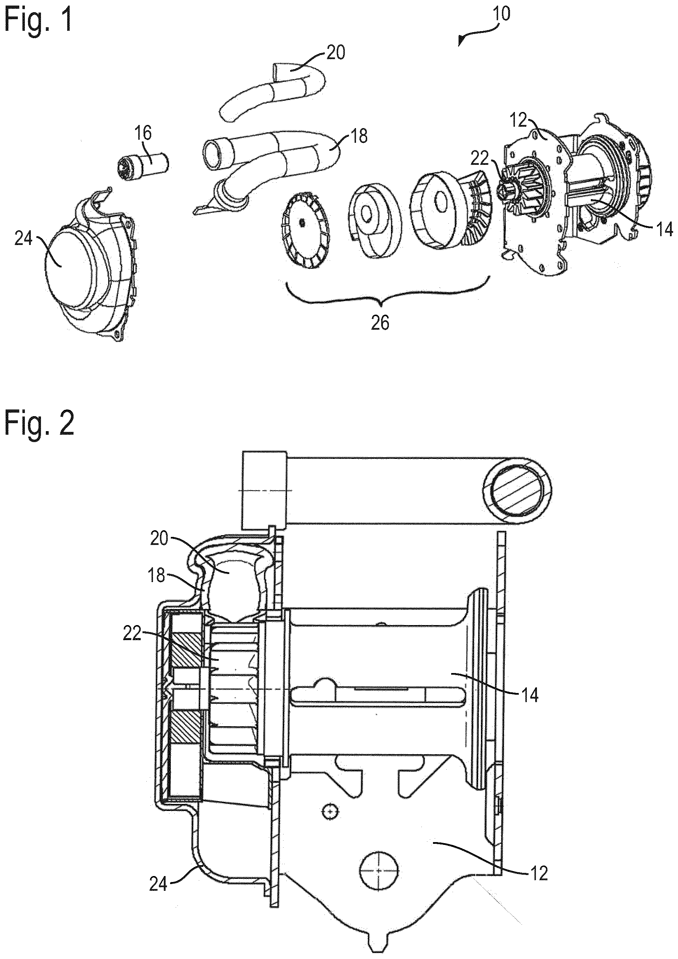

In Figure 1 the substantial component parts of an example embodiment of a belt retractor 10 comprising a pyrotechnically driven belt tensioner are shown. In Figure 2 the belt retractor is illustrated in the assembled state. The belt retractor 10 comprises a frame 12 supporting a rotatable belt reel 14 onto which a safety belt is wound. Furthermore, the belt retractor 10 includes a force-limiting mechanism (load limiter) not shown here in detail.

The belt tensioner of the belt retractor 10 includes a pyrotechnic drive unit 16, a tensioner tube 18 having a bent tubular portion, a load transmission element 20 disposed in the tensioner tube 18 as well as a toothed pinion 22. As can be seen in Figure 2 the belt reel 14 and the pinion 22 are positioned such that they are coaxial, with adjoining axial sides. The component parts of the belt tensioner are jointly arranged in a tensioner housing 24. In Figure 1 furthermore the retracting mechanism 26 of the belt retractor 10 is shown. This mechanism is not important to the function of the belt tensioner and the load limiter so that it is not explained in detail.

The following description of a basic concept and three preferred embodiments of the invention is based on a belt retractor design as generally described above.

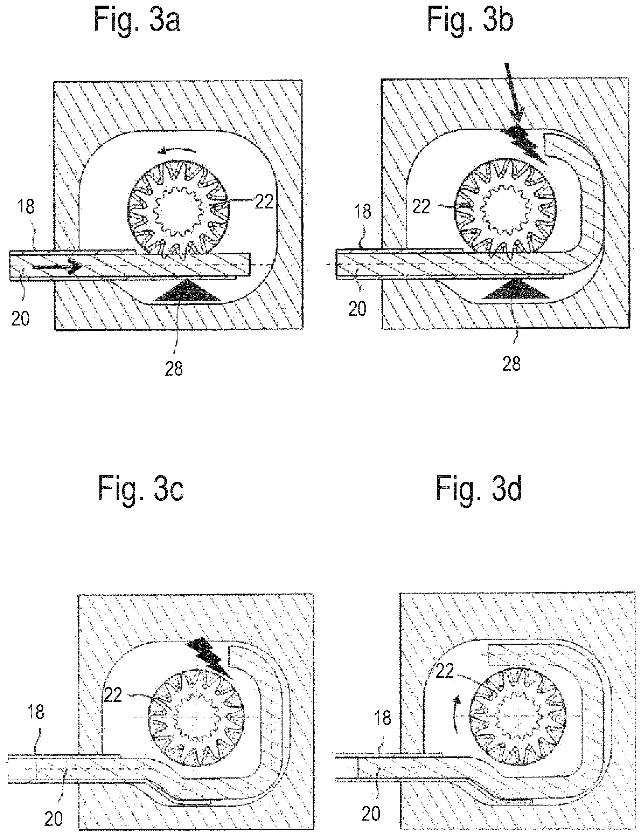

Figures 3a-3d show a basic concept of a disengagement mechanism that allows rotation of the belt reel 14 independent of the load transmission element 20 during the load limiting phase following the belt tensioning phase.

When the pyrotechnic drive unit 16 is activated for tensioning of the safety belt, the excessive pressure generated in the tensioner tube 18 urges the load transmission element 20 in a tensioning direction away from the drive unit 16 so that the load transmission element 20 engages in the pinion 22, as shown in Figure 3a. The load transmission element 20 or the tensioner tube 18 (or an extension thereof) is supported by a support element 28 to ensure that the forward moving load transmission element 20 remains in engagement with the pinion 22 during the belt tensioner phase so that the pinion 22 is rotated forcibly in a winding direction. The belt reel 14 coupled to the pinion 22 is rotated with the latter so that the safety belt is wound onto the belt reel 14 and thus belt tensioning is effectuated.

At the end of the belt tensioning phase the disengagement mechanism is activated, which is symbolically indicated by the arrow in Figure 3b. Specific embodiments of the disengagement mechanism and details about its activation will be described in connection with the preferred embodiments further below.

When the disengagement mechanism is activated, the support element 28 is transferred from its initial first state into a second state. The transfer into the second state may include, for example, a change of position, bending or breaking of the support element, or any combinations thereof. In the second state the support element 28 no longer fulfills its function of supporting the load transmission element 20 or the tensioner tube 18 (or an extension thereof).

As a result, the load transmission element 20 is allowed, or even actively forced, to disengage from the pinion 22, as shown in Figure 3c. While the load transmission element 20 may be further moving on in the tensioning direction, the pinion 22 no longer forces the belt reel 14 to rotate in the winding direction. Thus, a force-limiting operation (load limiting phase) following the belt tensioning phase is possible without any interference by the load transmission element 20. In particular, a limited rotation of the belt reel 14 opposite to the winding direction is allowed so as to prevent the load acting on the vehicle occupant from increasing excessively, as shown in Figure 3d.

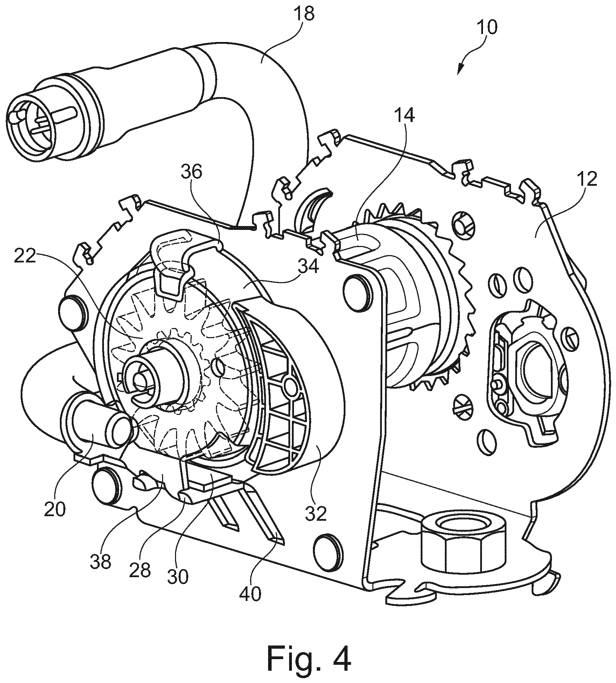

In Figure 4 a first embodiment of a belt retractor 10 including a disengagement mechanism is shown. Components which are similar to those of the belt retractor 10 shown in Figures 1 and 2 are given the same reference numerals. (The pyrotechnic drive unit is not shown in Figure 4.)

Several members of the belt retractor 10 define a pathway for the load transmission element 20 behind the exit of the tensioner tube 18. These members include an extension 30 of the tensioner tube 18 and a curved guide member 32.

The extension 30 is formed like an elongated plate, and - compared to the tensioner tube 18 - it can be plastically deformed more easily. The extension 30 is positioned in close radial distance to the pinion 22. In particular, the smallest distance between the tips of the teeth of the pinion 22 and the opposing surface of the extension 30 is smaller than the diameter of the load transmission element 20.

The extension 30 rests on a support element 28. The support element 28, e.g. a steel plate, is held in the frame 12 of the belt retractor 10 and can be moved from a first position (shown in Figure 4), in which it firmly supports the extension 30, to a second position, in which it does not support the extension 30 anymore, as will be explained in detail further below.

The pinion 22 is partly surrounded by a cup-like cover 34 that is mounted so as to be rotatable about an axis A about which also the pinion 22 rotates together with the belt reel 14. A portion of the outer peripheral wall of the cover 34 and a curved surface of the guide member 32 further define the pathway for the load transmission element. A stop portion 36 extends radially from the cover 34 into the pathway. On the opposite side the cover 34 is provided with a radially protruding cam 38. The cam 38 engages the supporting element 30.

The cover 34 with the stop portion 36 and the cam 38 can be regarded as a pivotally mounted lever. This lever construction, together with the support element 28, are parts of a disengagement mechanism as will be explained below.

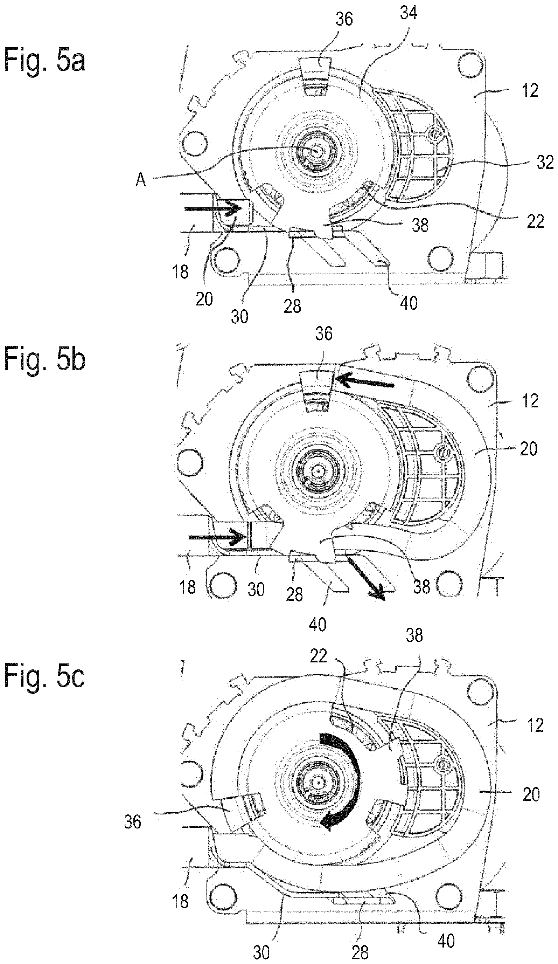

After activation of the pyrotechnic drive unit 16 the load transmission element 20 exits the tensioner tube 18 and is guided along the extension 30 (see Figure 5a). The transmission element 20 engages the teeth of the pinion 22 so that the pinion 22 and the belt reel 14 rotate jointly in the winding direction during the belt tensioning phase. During the belt tensioning phase the load transmission element 20 follows the pathway defined, inter alia, by the supported extension 30, the firmly held guide member 32 and the outer surface of the cover 34.

At the end of the belt tensioning phase the load transmission element 20 reaches the stop portion 36, as can be seen in Figure 5b. The further movement of the load transmission element 20 causes the cover 34 to swivel around the axis A in anti-clockwise direction according to the view of Figures 5a-5c. By that rotation the cam 38 pushes the support element 28 out of its first position so that it moves into the second position (see Figure 5c).

According to the design shown in Figure 4, the frame 12 has slots 40 for guiding the support element 28 towards the second position due to the force exerted by the pinion 22 on the load transmission element 20 which is transferred to the support element 28 via the extension 30.

Without the support of the support element 28 the extension 30 easily bends away from the pinion 22 due to the force exerted by the pinion 22 on the load transmission element 20. It is recalled that the rigidity of the extension 30 is rather low. The deforming of the extension 30 creates enough free space for the load transmission element to pass by the pinion 22 in case the load transmission element 20 is still moving.

This means that the load transmission element 20 is no longer in engagement with the pinion 22, and so the belt reel 14 is allowed to rotate in the unwinding direction without interference by the load transmission element 20 and the pinion 22 in the course of a force-limiting operation following after the belt tensioning phase, as shown in Figure 5c.

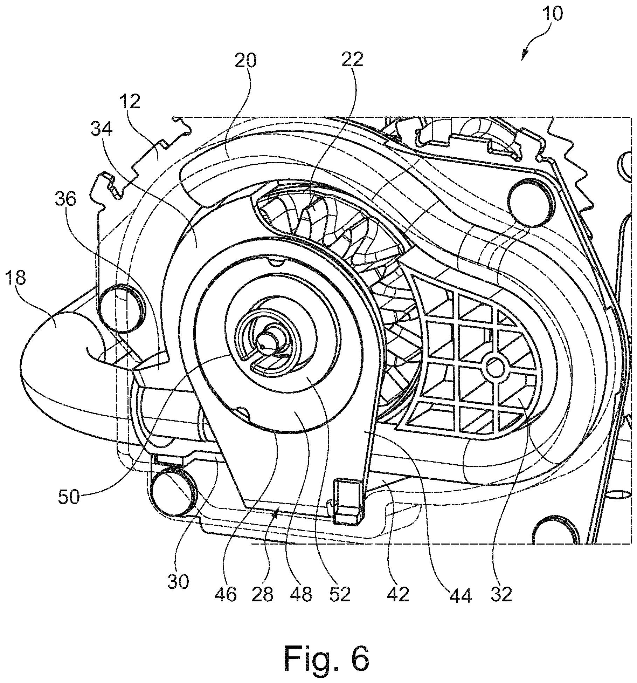

Figure 6 shows a design of a belt retractor 10 with a disengagement mechanism according to a second embodiment. Components which are similar to those of the belt retractor 10 shown in Figures 1 and 2 are given the same reference numerals. (The pyrotechnic drive unit is not shown in Figure 6.) Part of the structure of the second embodiment is similar to that of the first embodiment, so the following description will mainly focus on the differences.

According to the common basic concept described further above, the support element 28 can be moved from a first position, in which it ensures that the load transmission element 20 is engaged with the pinion 22, into a second position, in which it enables the load transmission element 20 to pass by the pinion 22 without forcing the pinion 22 to rotate in the winding direction.

Like in the first embodiment, an extension 30 is formed at the exit of the tensioner tube 18 which rests on a support element 28. However, the support element 28 not only has a plate portion 42 for guiding the load transmission element, but also a bearing portion 44 extending at an angle of about 90° from the plate portion 42 towards the pinion 22. The bearing portion 44 has a circular opening 46 into which an axially circular projection 48 of the cover 34 is inserted. The projection 48 is circular and matches the opening 46 of the bearing portion 44. The circular projection 48 itself has a circular, non-coaxial bore 50, i.e. the center of the circular bore 50 is shifted relative to the center of the circular projection 48. The bore 50 receives an axially extending shaft portion 52 which is coaxial with the rotation axis A of the pinion 22 and the belt reel 14.

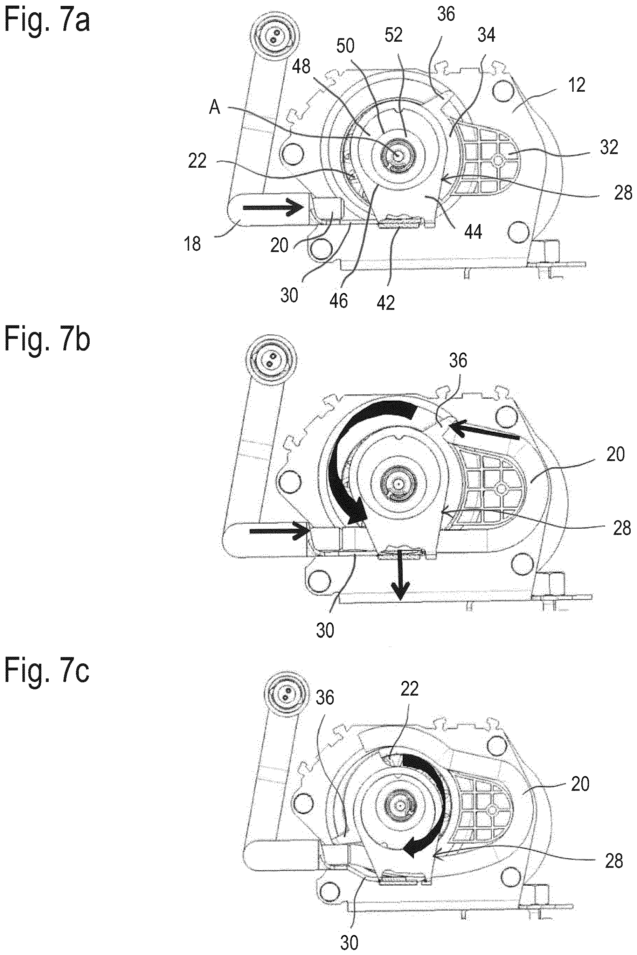

During the belt tensioning phase the load transmission element 20 follows the defined pathway (see Figures 7a and 7b). When the load transmission element 20 hits the stop portion 36, the cover 34 with the projection 48 is turned anti-clockwise (according to the view of Figures 7a-7c). Since the projection 48 is eccentrically supported with respect to the shaft portion 52, the eccentrically turning projection 48 urges the bearing portion 44 downwards (according to the view of Figures 7a-7c). As a result, the whole support element 28 including the plate portion 42 moves downwards into the second position. In effect, the whole cover 34 acts as a lever pushing the support element 28 away from the pinion 22.

With the support element 28 in the second position the extension 30 easily bends away from the pinion 22 due to the force exerted by the pinion 22 on the load transmission element 20, thereby making room for the load transmission element to pass by the pinion 22. Accordingly, the belt reel 14 is no longer affected by the load transmission element 20 acting on the pinion 22, and a force-limiting operation can be performed, as shown in Figure 7c.

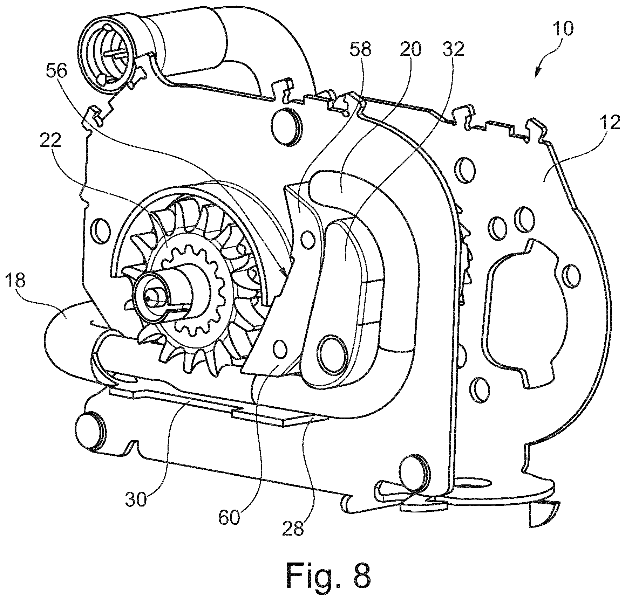

In Figure 8 a third embodiment of a belt retractor 10 with a disengagement mechanism is shown. Components which are similar to those described before are given the same reference numerals, respectively. According to the common basic concept the support element 28 can be transferred from a first state, in which it ensures that the load transmission element 20 is engaged with the pinion 22, into a second state, in which it enables the load transmission element 20 to pass by the pinion 22 without forcing the pinion 22 to rotate in the winding direction.

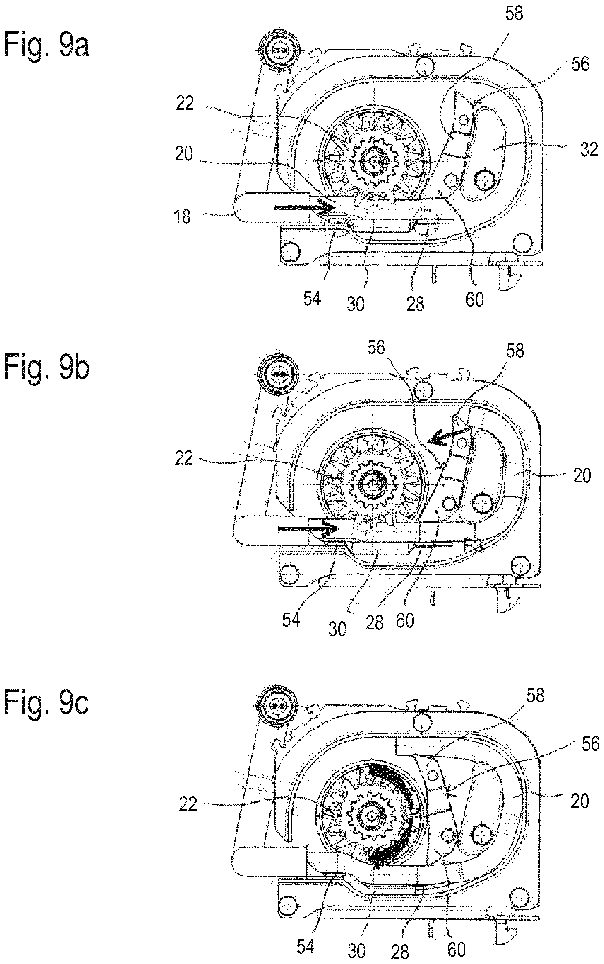

In the third embodiment the support element 28 is a hook portion of the extension 30. In particular, the extension 30 is held by a first hook portion 54 received in a first recess of the frame 12 and a second hook portion received in a second recess of the frame 12 (see the dotted circles in Figure 9a). The second hook portion, which acts as the support element 30, is located downstream of the first hook portion 54 with respect to the direction of movement of the load transmission element 20.

Instead of a cover the disengagement mechanism of the belt retractor 10 further comprises a lever 56 arranged next to the pinion 22. The lever 56 can be swiveled about an axis that is parallel to the rotation axis A of the pinion 22 and the belt reel 14. The lever 56 has a first leg 58 and a second leg 60 extending to opposite sides of the pivot axis. In the initial position shown in Figure 8 the first leg 58 extends into the pathway of the load transmission element 20 while the second leg 60 reaches close to the pathway opposite the support element 28 (second hook portion) but does not extend into the pathway.

As the load transmission element 20 follows the defined pathway and hits the first leg 58 (see Figure 9b) the lever 56 is swiveled. By the swiveling movement the second leg 60 enters the pathway and presses the load transmission element towards the support element 30. The support element 30 cannot withstand the pressure and breaks or bends so that it is urged into a second position, as shown in Figure 9c.

With the support element 28 in the second state, the load transmission element 20 is no longer forced to engage the pinion 22. Accordingly, the load transmission element 20 then passes by the pinion 22, and the belt reel 14 is available for a force-limiting operation (see Figure 9c), independent from the load transmission element 20.

### List of Reference Signs

- 10: belt retractor
- 12: frame
- 14: belt reel
- 16: drive unit
- 18: tensioner tube
- 20: load transmission element
- 22: pinion
- 24: tensioner housing
- 26: retracting mechanism
- 28: support element
- 30: extension
- 32: guide member
- 34: cover
- 36: stop portion
- 38: cam
- 40: slots
- 42: plate portion
- 44: bearing portion
- 46: opening
- 48: projection
- 50: bore
- 52: shaft portion
- 54: first hook portion
- 56: lever
- 58: first leg
- 60: second leg

## Claims

1. A belt retractor (10) for a vehicle safety belt system, the belt retractor (10) comprising a belt tensioner for tensioning a safety belt during a belt tensioning phase, and a load limiter for limiting the load applied by the safety belt on a vehicle occupant during a load limiting phase after the belt tensioning phase,
the belt tensioner including a frame (12), a belt reel (14), a toothed pinion (22), a drive unit (16) and an elongated load transmission element (20),
the belt reel (14) being rotatably supported in the frame (12),
the pinion (22) being coupled to the belt reel (14),
the load transmission element (20) engaging the teeth of the pinion (22) during the belt tensioning phase,
the belt tensioner further including a disengagement mechanism for disengaging the load transmission element (20) from the pinion (22) at the end of the belt tensioning phase,
**characterized in that** the disengagement mechanism includes a support element (28) that is transferable from an initial first state, in which the support element (28) keeps the load transmission element (20) in engagement with the pinion (22), into a second state, in which the support element (28) no longer keeps the load transmission element (20) in engagement with the pinion (22),
and **in that** the disengagement mechanism includes a lever construction (34, 36, 38; 34, 36, 48; 56) directly or indirectly acting on the support element (28),
and **in that** the lever construction includes a first lever portion (36; 58) arranged in a pathway of the load transmission element (20).

2. The belt retractor (10) according to claim 1, **characterized in that** transferring the load transmission element (20) into the second state includes changing the position of and/or bending and/or breaking the load transmission element (20).

3. The belt retractor (10) according to claim 1, **characterized in that** in the second state the support element (28) provides room for the load transmission element (20) to pass by the pinion (22).

4. The belt retractor (10) according to any of the preceding claims, **characterized in that** the disengagement mechanism is activated by the moving load transmission element (20).

5. The belt retractor (10) according to any of the preceding claims, **characterized in that** the support element (22) is configured to be transferred from the first state into the second state by a force exerted by the moving load transmission element (20).

6. The belt retractor (10) according to any of the preceding claims, **characterized in that** the lever construction includes a second portion (38; 48; 60) which, upon swiveling of the lever construction, transfers the support element (28) into the second state.

7. The belt retractor (10) according to any of the preceding claims, **characterized in that** the second portion (48) of the lever construction is arranged to rotate eccentrically with respect to the rotation axis of the pinion (22) and the belt reel (14).

8. The belt retractor (10) according to any of the preceding claims, **characterized in that** the lever construction swivels about an axis that is identical to a rotation axis (A) of the pinion (22) and the belt reel (14).

9. The belt retractor (10) according to any of the preceding claims, **characterized in that** the lever construction includes a lever (56) having a first leg (58) arranged in a pathway of the load transmission element (20) and a second leg (60) indirectly acting on the support element (28) by pressing on the load transmission element (20) when the lever (56) is swiveled.

10. The belt retractor (10) according to any of the preceding claims, **characterized by** at least one slot (40) engaged by the support element (28) for guiding the support element (28) from a first position to a second position.

## Patentansprüche

1. Gurtaufroller (10) für ein Fahrzeugsicherheitsgurtsystem, wobei der Gurtaufroller (10) einen Gurtstraffer zum Spannen eines Sicherheitsgurtes während einer Gurtspannphase und einen Lastbegrenzer zum Begrenzen der vom Sicherheitsgurt auf einen Fahrzeuginsassen ausgeübten Last während einer Lastbegrenzungsphase nach der Gurtspannphase umfasst,
wobei der Gurtstraffer einen Rahmen (12), eine Gurtrolle (14), ein Zahnrad (22), eine Antriebseinheit (16) und ein längliches Lastübertragungselement (20) beinhaltet,
wobei die Gurtspule (14) drehbar in dem Rahmen (12) gelagert ist,
wobei das Ritzel (22) mit der Gurtspule (14) gekoppelt ist,
das Lastübertragungselement (20) während der Straffphase in die Zähne des Ritzels (22) eingreift,
der Gurtstraffer ferner einen Auskupplungsmechanismus zum Auskuppeln des Lastübertragungselements (20) vom Ritzel (22) am Ende der Straffphase beinhaltet,
**dadurch gekennzeichnet, dass** der Ausrückmechanismus ein Stützelement (28) beinhaltet, das von einem ersten Anfangszustand, in dem das Stützelement (28) das Lastübertragungselement (20) in Eingriff mit dem Ritzel (22) hält, in einen zweiten Zustand überführbar ist, in dem das Stützelement (28) das Lastübertragungselement (20) nicht mehr in Eingriff mit dem Ritzel (22) hält,
und dass der Ausrückmechanismus eine Hebelkonstruktion (34, 36, 38; 34, 36, 34, 36, 48; 56) beinhaltet, die direkt oder indirekt auf das Trägerelement (28) wirkt,
und dass die Hebelkonstruktion einen ersten Hebelabschnitt (36; 58) beinhaltet, der in einer Bahn des Lastübertragungselements (20) angeordnet ist.

2. Gurtaufroller (10) nach Anspruch 1, **dadurch gekennzeichnet, dass** das Übertragen des Lastübertragungselements (20) in den zweiten Zustand das Ändern der Position und/oder das Biegen und/oder Brechen des Lastübertragungselements (20) beinhaltet.

3. Gurtaufroller (10) nach Anspruch 1, **dadurch gekennzeichnet, dass** das Trägerelement (28) im zweiten Zustand Platz für das Lastübertragungselement (20) zum Durchlaufen des Ritzels (22) bietet.

4. Gurtaufroller (10) nach einem der vorstehenden Ansprüche, **dadurch gekennzeichnet, dass** der Ausrückmechanismus durch das bewegliche Lastübertragungselement (20) aktiviert wird.

5. Gurtaufroller (10) nach einem der vorhergehenden Ansprüche, **dadurch gekennzeichnet, dass** das Trägerelement (22) konfiguriert ist, um durch eine vom beweglichen Lastübertragungselement (20) ausgeübte Kraft vom ersten Zustand in den zweiten Zustand überführt zu werden.

6. Gurtaufroller (10) nach einem der vorstehenden Ansprüche, **dadurch gekennzeichnet, dass** die Hebelkonstruktion einen zweiten Abschnitt (38; 48; 60) beinhaltet, der beim Schwenken der Hebelkonstruktion das Stützelement (28) in den zweiten Zustand überführt.

7. Gurtaufroller (10) nach einem der vorstehenden Ansprüche, **dadurch gekennzeichnet, dass** der zweite Abschnitt (48) der Hebelkonstruktion exzentrisch zur Drehachse des Ritzels (22) und der Gurtrolle (14) drehbar angeordnet ist.

8. Gurtaufroller (10) nach einem der vorstehenden Ansprüche, **dadurch gekennzeichnet, dass** die Hebelkonstruktion um eine Achse schwenkt, die mit einer Drehachse (A) des Ritzels (22) und der Gurtrolle (14) identisch ist.

9. Gurtaufroller (10) nach einem der vorstehenden Ansprüche, **dadurch gekennzeichnet, dass** die Hebelkonstruktion einen Hebel (56) mit einem ersten Schenkel (58), der in einer Bahn des Lastübertragungselements (20) angeordnet ist, und einem zweiten Schenkel (60), der indirekt auf das Stützelement (28) wirkt, durch Drücken auf das Lastübertragungselement (20) beim Schwenken des Hebels (56) beinhaltet.

10. Gurtaufroller (10) nach einem der vorhergehenden Ansprüche, **gekennzeichnet durch** mindestens einen Schlitz (40), der von dem Trägerelement (28) zum Führen des Trägerelements (28) von einer ersten Position in eine zweite Position eingerastet ist.

## Revendications

1. Enrouleur de ceinture (10) pour un système de ceinture de sécurité de véhicule, l'enrouleur de ceinture (10) comprenant un tendeur de ceinture pour tendre une ceinture de sécurité pendant une phase de tension de ceinture, et un limiteur de charge pour limiter la charge appliquée par la ceinture de sécurité sur un occupant du véhicule pendant une phase de limitation de charge après la phase de tension de ceinture,
le tendeur de ceinture comprenant un châssis (12), une bobine de ceinture (14), un pignon denté (22), une unité d'entraînement (16) et un élément de transmission de charge allongé (20),
la bobine de ceinture (14) étant supporté de manière rotative dans le cadre (12),
le pignon (22) étant couplé à la bobine de ceinture (14),
l'élément de transmission de charge (20) engageant les dents du pignon (22) pendant la phase de tension de la ceinture,
le tendeur de ceinture comprenant en outre un mécanisme de désengagement pour désengager l'élément de transmission de charge (20) du pignon (22) à la fin de la phase de tension de courroie,
**caractérisé en ce que** le mécanisme de désengagement comprend un élément de support (28) qui est transférable d'un premier état initial, dans lequel l'élément de support (28) maintient l'élément de transmission de charge (20) en engagement avec le pignon (22), dans un second état, dans lequel l'élément de support (28) ne maintient plus l'élément de transmission de charge (20) en engagement avec le pignon (22),
et **en ce que** le mécanisme de désengagement comprend une construction de levier (34, 36, 38 ; 34, 36, 48 ; 56) agissant directement ou indirectement sur l'élément de support (28),
et **en ce que** la construction du levier comprend une première partie de levier (36 ; 58) disposée dans un chemin de l'élément de transmission de charge (20).

2. Enrouleur de ceinture (10) selon la revendication 1, **caractérisé en ce que** le transfert de l'élément de transmission de charge (20) dans le second état comprend le changement de la position et/ou la flexion et/ou la rupture de l'élément de transmission de charge (20).

3. Enrouleur de ceinture (10) selon la revendication 1, **caractérisé en ce que**, dans le second état, l'élément de support (28) laisse de la place pour que l'élément de transmission de charge (20) passe par le pignon (22).

4. Enrouleur de ceinture (10) selon l'une quelconque des revendications précédentes, **caractérisé en ce que** le mécanisme de débrayage est activé par l'élément de transmission de charge mobile (20).

5. Enrouleur de ceinture (10) selon l'une quelconque des revendications précédentes, **caractérisé en ce que** l'élément de support (22) est configuré pour être transféré du premier état au second état par une force exercée par l'élément de transmission de charge mobile (20).

6. Enrouleur de ceinture (10) selon l'une quelconque des revendications précédentes, **caractérisé en ce que** la construction du levier comprend une deuxième partie (38 ; 48 ; 60) qui, lors du pivotement de la construction du levier, transfère l'élément de support (28) dans le deuxième état.

7. Enrouleur de ceinture (10) selon l'une quelconque des revendications précédentes, **caractérisé en ce que** la deuxième partie (48) de la construction à levier est agencée pour tourner de manière excentrique par rapport à l'axe de rotation du pignon (22) et de la bobine de ceinture (14).

8. Enrouleur de ceinture (10) selon l'une quelconque des revendications précédentes, **caractérisé en ce que** la construction du levier pivote autour d'un axe identique à un axe de rotation (A) du pignon (22) et de la bobine de ceinture (14).

9. Enrouleur de ceinture (10) selon l'une quelconque des revendications précédentes, **caractérisé en ce que** la construction du levier comprend un levier (56) ayant une première branche (58) disposée dans une trajectoire de l'élément de transmission de charge (20) et une seconde branche (60) agissant indirectement sur l'élément de support (28) en appuyant sur l'élément de transmission de charge (20) lorsque le levier (56) est basculé.

10. Enrouleur de ceinture (10) selon l'une quelconque des revendications précédentes, **caractérisé par** au moins une fente (40) engagée par l'élément de support (28) pour guider l'élément de support (28) d'une première position à une seconde position.
